# EUROPÄISCHE PATENTSCHRIFT

(11) **EP 1 361 920 B1**
(45) Veröffentlichungstag und Bekanntmachung des Hinweises auf die Patenterteilung: **31.05.2006**
(21) Anmeldenummer: 02744893.5
(22) Anmeldetag: 06.02.2002
(51) Int. Cl.: B01J 19/00, B01L 3/00

(54) **SYNTHESEVORRICHTUNG UND VERFAHREN ZU DEREN HERSTELLUNG**
SYNTHESIS DEVICE AND METHOD FOR PRODUCING THE SAME
DISPOSITIF DE SYNTHESE ET PROCEDE DE FABRICATION ASSOCIE

(30) Priorität: 23.02.2001 DE 10108892
(43) Veröffentlichungstag der Anmeldung: 19.11.2003
(73) Patentinhaber: Graffinity Pharmaceuticals Aktiengesellschaft, 69120 Heidelberg (DE)
(72) Erfinder: RAU, Harald, 69126 Heidelberg (DE); FRANK, Michael, 69221 Dossenheim (DE); SCHMIDT, Kristina, 69126 Heidelberg (DE); DICKOPF, Stefan, 69118 Heidelberg (DE); BURKERT, Klaus, 69126 Heidelberg (DE)
(74) Vertreter: Vossius & Partner
(86) Internationale Anmeldenummer: PCT/EP2002/001217
(87) Internationale Veröffentlichungsnummer: WO 2002/068113

(56) Entgegenhaltungen:
- EP-A- 0 608 779
- EP-A- 0 844 025
- EP-A- 1 025 902
- WO-A-00/35565
- DE-A- 4 329 791
- DE-A- 19 912 909
- US-A- 5 665 562
- US-A- 5 874 219
- US-A- 5 925 732

## Beschreibung

Die vorliegende Erfindung betrifft eine Synthesevorrichtung, insbesondere zur Verwendung in der kombinatorischen Chemie (z.B. Festphasensynthese), sowie ein Verfahren zu deren Herstellung.

Zur Herstellung einer Vielzahl von chemischen Verbindungen wurden in der Vergangenheit zahlreiche Methoden und Apparaturen entwickelt, die den Zeitaufwand zur Synthese dieser Vielzahl von chemischen Verbindungen minimieren und dabei gleichzeitig möglichst alle Abläufe automatisieren und die Apparatedimensionen miniaturisieren. Dabei spielt die Parallelisierung der Syntheseabläufe für die verschiedenen chemischen Produkte eine wichtige Rolle, d.h. alle Synthesen sollen nach einem Syntheseprotokoll verlaufen.

Hierbei hat sich gezeigt, daß Synthesen an fester Phase in besonderem Maß geeignet sind, die oben genannten Bedingungen zu erfüllen. Erste Arbeiten auf dem Gebiet der Festphasensynthese gehen auf Merrifield et al. zurück (R.B. Merrifield, J. Am. Chem. Soc. **85**, 2149-2154 (1963).

Ein Synthesekonzept, das zur Generierung einer Vielzahl von chemischen Verbindungen eingesetzt wird, ist die sogenannte kombinatorische Chemie. Diese umfaßt eine ganze Bandbreite von Techniken, die in wenigen, oft automatisierten Reaktionsfolgen diese Vielzahl verschiedener Substanzen (sog. Substanzbibliotheken) zu erzeugen vermögen (siehe z.B. M.A. Gallop et al, J. Med. Chem. 37 (1994), 1233-1251; E.M. Gorden et al, J. Med. Chem. 37 (1994), 1385-1401). Auch hierbei werden die Reaktionen aus praktischen Gründen bevorzugt an fester Phase durchgeführt. Die Trägermaterialien sind üblicherweise quervernetzte Polymere in Partikelform (sog. "beads" oder Perlen aus Polystyrol- oder Polyethylenglykol/Polystyrolharz). Ausgehend von einer funktionalisierten Oberfläche werden in mehreren Syntheseschritten die gewünschten Strukturen aufgebaut. Einen Überblick über die Synthese von Substanzbibliotheken an fester Phase sowie in Lösung geben L.A. Thompson und J.A. Ellman, Chem. Rev. 96 (1996), 555-600. Nach Abschluß einer kombinatorischen Festphasensynthese werden die Produkte allgemein von der festen Phase abgespalten, d.h. durch Trennen einer labilen Bindung zwischen Endprodukt und Trägerharz freigesetzt. Hierbei kommen häufig Linker zum Einsatz, die als Verbindungsglied zwischen Trägerharz und der interessierenden chemischen Verbindung fungieren. (Zu Festphasenträgern, Linkern und geeigneten Reaktionen siehe z.B. Florenzio Zaragoza Dörwald, *Organic Synthesis on Solid Phase, Supports, Linkers, Reactions,* Wiley-VCH, Weinheim 2000).

Neben den bereits erwähnten Beads spielen planare Träger für die Festphasensynthese eine bedeutende Rolle. Die wichtigsten Materialien sind hierbei Glas, Cellulose- und andere polymere Membranen. Für Synthesezwecke sollten die Materialien porös, mechanisch und chemisch stabil aber dennoch einfach zerteilbar sein, um eine möglichst hohe Synthesekapazität pro (Ober)Flächeneinheit und universelle Handhabbarkeit zu gewährleisten. Diese Voraussetzungen erfüllen nur Membranen natürlichen (wie Cellulose) oder synthetischen Ursprungs. Letztgenannte sind beispielsweise aufgebaut aus Polyethylen, auf das Polystyrol aufgepfropft ist, wobei dieses wiederum mittels Aminomethylierung funktionalisiert ist, oder aus Polypropylen, das mit kreuzvernetztem Polyhydroxypropylacrylat beschichtet ist (Michal Lebl, Biopolymers (Peptide Science) **47**, 397-404 (1998)). Auch die Verwendung quervernetzter funktionalisierter Teflon® Membranen zur Synthese von kombinatorischen Bibliotheken ist bekannt (M. Stankovä, S. Wade, K.S. Lam, M. Lebl, Peptide Research **7**, 292-298 (1994)). Weitere Polymerzusammensetzungen von Membranen für die Synthese von Oligopeptiden und -nukleotiden sind in US-A-4 923 901 beschrieben.

Neben dem zu verwendeten Träger für die Festphasensynthese spielt die Wahl der Geometrie des Synthesereaktors für die Automatisierung und Miniaturisierung eine wichtige Rolle. Hierbei sollten generell die Synthesebereiche in einem regelmäßigen Raster und positionsadressierbar angeordnet sein. Üblicherweise verwendet man Behältnisse, in die das Festphasenmaterial (Beads, Membranstückchen, etc.) eingebracht wird, wobei die Behältnisse untereinander durch einen Verguß fest miteinander verbunden sind. Um den einfachen Einsatz leistungsstarker Roboter zum Pipettieren oder ähnlichem zu ermöglichen, sollten die Behältnisse nach oben hin offen sein. Eine Mikrotiterplatte erfüllt beispielsweise diese Voraussetzungen. Bei der Verwendung von Membranen kann auch ein ganzes Membranblatt als planarer Synthesereaktor angesehen werden.

Für den letztgenannten Fall kommt insbesondere die Tüpfeltechnik ("Spot" Synthese) in Frage, die auch bei Cellulose eingesetzt wird (Michal Lebl, Biopolymers (Peptide Science) **47**, 397-404 (1998)). Bei der Spotting-Technik werden die Proben mittels Transferpins oder Mehrfachpipettierern von einer Mikrotiterplatte auf den Träger transferiert. Dazu werden die Transferpins in die Probenflüssigkeit getaucht - der an der Spitze des Transferpins haftende Tropfen mit Probeflüssigkeit wird dann auf dem Träger abgesetzt. Durch Variieren der Pingröße können unterschiedliche Probenvolumina transferiert werden. Sharn et al. beschreibt die Spot Synthese einer kombinatorischen 1,3,5-Triazinbibliothek auf verschieden funktionalisierten Polypropylen-membranen (D. Scharn, H. Wenschuh, U. Reineke, J. Schneider-Mergener, L. Germeroth, J. Comb. Chem. **2**, 361-369 (2000)).

Nachteilig bei der Spotting-Technik ist, daß sich beim Auftragen der Flüssigkeit ein Konzentrationsgradient um den Aufgabepunkt bilden kann. Weiterhin ist eine sequenzielle Zugabe von mehreren Reagenzien für einen Reaktionsschritt nicht möglich, wenn diese ein homogenes Reaktionsgemisch ausbilden sollen. Ebenso ist eine individuelle (spotweise) Behandlung der einzelnen Reaktionsorte (Membranbereiche) durch "Batch-Reagenzien" wie Waschlösungen nicht oder nur schwer möglich.

Verwendet man Reaktionsbehältnisse, wie beispielsweise Mikrotiterplatten, so ist es vorteilhaft, wenn das Trägermaterial im Reaktionsbehältnis fixiert wird. Dies verhindert ein unkontrolliertes Herumschwimmen in der Reagenzlösung. Durch eine Fixierung kann gewährleistet werden, daß der Träger vollständig getränkt wird und somit überall etwa die gleiche Reagenz-Konzentration vorliegt. Auch bei Arbeiten unter reduziertem Druck oder Verwenden sogenannter "Plate-Washer" ist eine Fixierung vorteilhaft. Dabei sind Membranstückchen den Beads üblicherweise zu bevorzugen, da bezogen auf die absolute Synthesekapazität eine Membraneinheit einer Vielzahl an Beadeinheiten äquivalent ist, d.h. sehr viele Beads benötigt werden, um eine vergleichbare Synthesekapazität wie ein Membranstückchen in den Dimensionen des Bodens einer Kavität einer Mikrotiterplatte zu erreichen. Das Handling solcher Beads ist schwierig und insbesondere eine Fixierung ist sehr umständlich.

Die WO-A-94/05394 beschreibt mehrere Möglichkeiten der Fixierung von Festphasenträgern. Zum einen wird ein mehrlagiger Träger (drei Platten) vorgeschlagen, bei dem sich im wesentlichen durch entsprechende Öffnungen in den oberen Schichten ein Reaktionsbehälter ausbildet. Im Bodenbereich sind Beads durch einen geeigneten Klebstoff fixiert. Dies ist sehr umständlich, da - wie bereits ausgeführt - das Handling sehr kleiner Partikel notwendig ist. Weiterhin müssen die Synthesebedingungen sowie die eingesetzten Reagenzien auf den verwendeten Klebstoff abgestimmt werden. Ebenso kann nicht ausgeschlossen werden, daß der Klebstoff die Eigenschaften der Beads für die Synthese negativ beeinflußt.

Eine in der WO-A-94/05394 beschriebene Alternative sieht das Aufpfropfen eines Polymerfilms im Bodenbereich des mehrschichtigen Reaktionsbehälters vor. Hierfür wird die Bodenplatte aus Polyethylen in mehreren Schritten mit Säurechlorid-Funktionalitäten versehen, um beispielsweise ein Methacrylamid-Polymer aufzubringen, auf das wiederum ein Polyacrylamid-Gel aufgepfropft wird, das mit Bisacrylamid quervernetzt ist und zusätzlich funktionalisiert werden muß, um beispielsweise einen geeigneten Linker oder Spacer für die Festphasensynthese chemisch anzuknüpfen. Ein solcher Aufbau eines für die Festphasensynthese geeigneten Polymerfilms umfaßt somit eine Reihe chemischer Schritte und ist daher sehr aufwendig. Weiterhin muß bei dem Aufbau des Reaktionsbehälters aus mehreren Platten auf eine ausreichende Dichtigkeit im Zwischenbereich der einzelnen Platten geachtet werden.

Eine weitere Möglichkeit, die in WO-A-94/05394 beschrieben ist, geht von der Verwendung eines Substrats in Form einer gesinterten Polyethylenscheibe mit einem Durchmesser von 1/4" und einer Dicke von 1/8" aus. Diese ist mit einem dünnen, hydrophilen, polaren, multifunktionalisierten Polymerfilm (HPMP) beschichtet und wird in die Ausnehmung einer Platte gedrückt, so daß der gesamte Reaktionsraum ausgefüllt ist. Durch das Hineindrücken wird versucht, ein Herausfallen zu verhindern, wobei eine Verjüngung im Bodenbereich ein Herausrutschen nach unten verhindert. Ferner sind ein oder mehrere Kanäle vorgesehen, um ein Vakuum anzulegen und somit ein Flüssigkeitstransport ermöglicht wird. Die Größe der Scheibe steht einer Miniaturisierung der Apparatur im Wege, ebenso ist ein Flüssigkeitstransport durch Absaugen apparativ aufwendig und ebenfalls nur mit sehr großem Aufwand zu miniaturisieren.

Die US-A-6 063 338 offenbart eine Mikrotiterplatte, die ein Cycloolefin für spektroskopische Zwecke enthält und ebenfalls für die Festphasensynthese geeignet sein soll. Hierbei wird unter anderem vorgeschlagen, daß die Kavitäteninnenwände und -böden funktionalisiert werden, um Komponenten für die Festphasensynthese zu immobilisieren. Nachteilig an solch einem Ansatz ist die geringe Synthesekapazität, die lediglich durch die Oberflächenbehandlung erreicht wird.

In der WO-A-99/32219 wird ein parallel arbeitendes Festphasensystem beschrieben, bei dem ganze Membranen zwischen Platten mit übereinander liegenden Öffnungen gepreßt werden, und an der Ober- und Unterseite mit zylindrischen Stutzen versehen sind, um ein von oben nach unten verlaufendes Pumpsystem zu realisieren. Ferner werden Beads als Festphasenträger vorgeschlagen, die in Behälter eingebracht werden, welche aus den Ausnehmungen einer Platte mit einem eingefügten Frittenboden gebildet werden. Durch das Pumpen von Flüssigkeit wird zumindest gewährleistet, daß eine gewisse Fixierung im Bodenbereich ermöglicht wird, d.h. ein ständiges Herumschwimmen der Partikel verhindert wird. Ein solches Pumpsystem ist jedoch sehr aufwendig und eine Miniaturisierung nur schwer möglich. Insbesondere bei der Verwendung von Membranblättern muß darauf geachtet werden, daß die Abdichtung eines Durchflußkanals vom nächsten erreicht wird. Ebenfalls wird der Einsatz von Ventilen vorgeschlagen, die einen zusätzlichen apparativen Aufwand verursachen.

Die EP-A-0 608 779 offenbart eine Apparatur zur Peptidsynthese, die aus einer Mikrotiterplatte besteht, in die Membranstückchen in die einzelnen Kavitäten eingeklemmt und dadurch fixiert werden. Das Verklemmen wird dadurch erreicht, daß der Durchmesser der Stückchen so gewählt wird, daß dieser etwas größer als der Durchmesser der Kavitäten ist. Nachteilig hierbei ist insbesondere, daß sich im Randbereich zwischen Membran und Mikrotiterplattenboden Hohlräume ausbilden, die einen ungehinderten Flüssigkeitsaustauch im Wege stehen. Weiterhin kann ein Herauslösen der Stückchen aus den Kavitäten während bestimmter Arbeiten, wie beispielsweise einer Vakuumtrocknung, nicht ausgeschlossen werden. Ebenfalls ist für eine solche Fixierung eine Membran gewisser Dicke notwendig, da ansonsten bei kleinen und dünnen Membranstückchen, wie sie beispielsweise in einer 96er Mikrotiterplatte benötigt werden, beim Kontakt mit Flüssigkeit ein Aufrollen der Ränder der Membranstückchen auftritt und somit die Fixierungswirkung aufgehoben wird.

Der vorliegenden Erfindung liegt die Aufgabe zugrunde, eine verbesserte Syntheseapparatur bzw. -vorrichtung zur Verfügung zu stellen, bei der ein Festphasenträger in einem Reaktorbehälter fixiert ist, sowie Verfahren zu deren Herstellung. Diese Aufgabe wird mit den Merkmalen der unabhängigen Patentansprüche gelöst. Bevorzugte Ausführungsformen sind in den abhängigen Patentansprüchen beschrieben.

Die Erfindung geht dabei von dem Grundgedanken aus, die Syntheseapparatur im wesentlichen aus einem Behälter mit Wand- und/oder Bodenbereichen sowie einem Festphasenträger zur Verwendung in der Festphasensynthese auszustatten, wobei vorzugsweise durch thermische Einwirkung auf einen relativ eng begrenzten Bereich des Festphasenträgers eine Fixierung des Trägers an mindestens einem der Behälterbereiche erfolgt.

Gemäß einer bevorzugten Ausführungsform der vorliegenden Erfindung werden als Festphasenträger chemisch funktionalisierte Membranen verwendet, die ein Polymer aufweisen. Vorzugsweise sind mehrere Behälter in einem regelmäßigen Raster angeordnet und durch einen Verguß bzw. ein integrales Gehäuse miteinander verbunden. Dieses Arrangement besteht vorteilhafterweise aus Kunststoff; besonders bevorzugt ist eine Mikrotiterplatte. Die Verbindung von Membran und Innenseite eines Behälters erfolgt vorzugsweise durch ein Punktschweiß-Verfahren, d.h. beide Materialien sollten idealerweise thermoplastische Eigenschaften besitzen und sich im Schmelzprozeß fest miteinander verbinden lassen. Überraschenderweise ist es jedoch z.B. bei Teflonmembranen und Cellulose ausreichend, wenn nur der Kunststoffbehälter thermoplastische Eigenschaften aufweist. Die ausgebildete Verklebung oder Verschweißung (Fixierung) ist sowohl gegen mechanische als auch chemische Einflüsse erstaunlich stabil, so daß normalerweise ein Entfernen nur noch unter Zerstörung der Membran möglich ist. Weiterhin sollten die Kunststoffe gegenüber den für die chemischen Synthesen verwendeten Chemikalien und Lösungsmittel chemisch beständig sein. Ebenso ist eine gewisse thermische Stabilität vorteilhaft.

Als besonders geeignetes Material für die Kunststoffbehälter hat sich Polypropylen erwiesen. Polypropylen ist gegen nahezu alle organischen Lösungsmittel inert und auch gegen aggressive Reagenzien beständig. Der nutzbare thermische Bereich liegt üblicherweise zwischen etwa -80°C und 100 °C. Als Behältnisse sind verschiedene, in ihren Maßen standardisierte Polypropylen-Mikrotiterplatten (PP-MTP) käuflich erhältlich. Diese sind mit einer unterschiedlichen Anzahl von Vertiefungen und Volumina in großem Umfang zu beziehen. Derzeit sind MTP aus Polypropylen mit 24, 96, 384 oder 1536 Vertiefungen mit Volumina von 8 µl bis 2.7 ml und Bodenflächen von 1.56 mm² bis 700 mm² pro Kavität zu erhalten. Als reaktive Phase haben sich u.a. verschiedene poröse, saugfähige Polypropylen und Teflon-Membranen als geeignet erwiesen. Polypropylen-Membranen mit verschiedenen Beladungsdichten an reaktiver Funktionalität (80 - 2500 nmol/cm²) sind käuflich erhältlich. Diese Membranen sind mit Hydroxyl- und Amino-Gruppen als funktionelle Gruppen erhältlich.

Nachstehend werden bevorzugte Ausführungsformen der vorliegenden Erfindung unter Bezugnahme auf die Zeichnungen näher beschrieben. Es zeigen:
- Figur 1: eine schematische Querschnittsansicht der erfindungsgemäßen Synthesevorrichtung;
- Figur 2: zeigt den Verlust der Synthesemenge einer fixierten Membran im Vergleich zu einer nicht fixierten Membran anhand der Verglasungsfläche zur Gesamtfläche; und
- Figur 3: Darstellungen einer 384er Mikrotiterplatte während verschiedener Zyklen beim Entfernen von Reagenzresten.

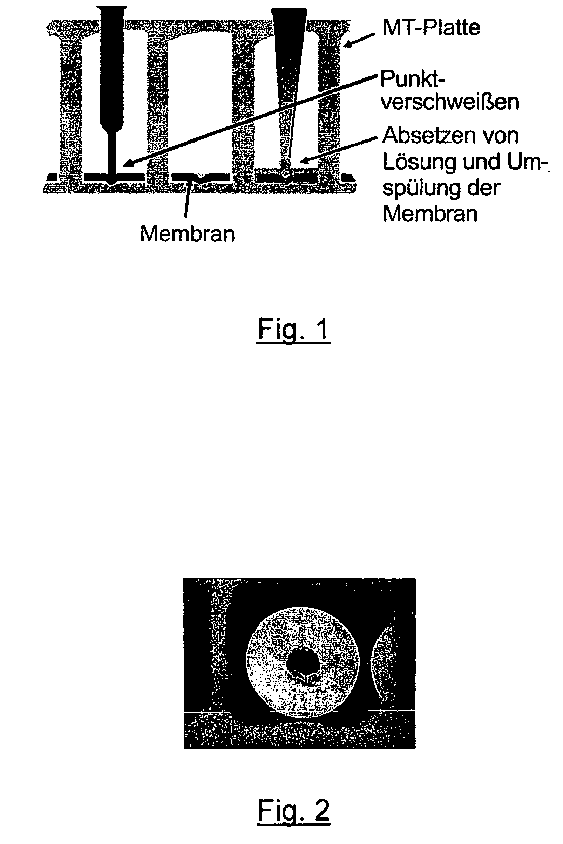

Bei der in Figur 1 gezeigten, bevorzugten Ausführungsform der vorliegenden Erfindung ist die Membran im Bodenbereich des Behälters fixiert. Allerdings könnte die Fixierung auch oder zusätzlich am Wandbereich des Behälters bzw. der Kavitäten erfolgen. Die Geometrie des Membranstückchens kann vorteilhafterweise der Kavität, insbesondere der Grundfläche der Kavität, derart angepaßt werden, daß deren Formen im wesentlichen übereinstimmen (z.B. runde Membranstückchen für runde Kavitäten) und die Wandungen zumindest größtenteils oder gar nicht von der Membran berührt werden.

Eine bevorzugte Ausführungsform des erfindungsgemäßen Verfahren zur Herstellung der beschriebenen Synthese-Behältnisse beginnt mit dem Stanzen der Membranen in die Mikrotiterplatte (MTP) hinein. Hierzu kann beispielsweise eine Stanze benutzt werden, bei der sich die MTP unter dem/den Stanzmesser(n) befindet. Solche Stanzen sind z.B. in der US-A-5 146 794 beschrieben. Beim Stanzen fallen die Membran-Ausschnitte (oder Membranstückchen) vorzugsweise direkt in die Kavitäten der MTP. Die Membran-Ausschnitte sind derart bemessen, daß sie sich nicht in den Kavitäten verkannten sondern etwas kleiner als das lichte Maß der Kavitäten sind.

Es hat sich als hilfreich erwiesen, die mit den Membran-Ausschnitten zu versehenden MTPs mit einer geeigneten Flüssigkeit, z.B. Ethanol, zu besprühen, da sich die Membran-Ausschnitte ansonsten - vermutlich aufgrund statischer Aufladung - teilweise an den Wänden der Kavitäten anstatt auf dem Boden anlagern.

Zur Befestigung der Membranen an der MTP ist ein thermisches Verfahren überraschenderweise besonders vorteilhaft. Hierbei wird vorzugsweise eine (z.B. elektrisch) auf 450 °C erhitzte Metallspitze mit einem Durchmesser von ca. 0.3 mm für etwa 0.8 s auf die Membran gedrückt, die sich am Boden der Kavität der MTP befindet. Dieser Prozeß läßt sich mit gängigen Robotersystemen automatisieren. Bei dem Verschweißen kommt es punktuell zum Schmelzen der Membran (im Fall der Polypropylen-Membran) und des darunter befindlichen MTP-Materials (z.B. PP-MTP). Beim anschließenden Erstarren bildet sich eine feste Verbindung zwischen beiden Komponenten aus.

Es hat sich gezeigt, daß die Membran in einem relativ kleinen Bereich um die Schweiß-Position herum ihre Porosität durch thermisches Zerfließen des Materials verliert. Der Bereich der thermoplastischen Verformung, in dem keine nennenswerte Syntheseausbeute mehr zu erwarten ist, beträgt ca. 0.7 mm um das Zentrum der Schmelz- bzw. Schweißposition. Der prozentuale Ausbeute-Verlust ist jedoch überraschenderweise im Vergleich zu einem nicht befestigten Membran-Ausschnitt gleicher Größe vernachlässigbar klein. Er ist generell abhängig von der Größe des Membranstückchens und der verwendeten MTP. Für eine kommerzielle 1536er MTP beträgt der geometrisch ermittelte Verlust vorzugsweise weniger als 5 %.

Die derart hergestellten Multisyntheseplatten können vor ihrer Verwendung mit einem geeigneten organischen Lösungsmittel gereinigt und anschließend getrocknet werden. Durch den Reinigungsschritt werden evtl. entstandene thermische Zersetzungsprodukte beim Anschmelzen entfernt.

Durch den Einsatz einer erfindungsgemäßen Syntheseapparatur mit Festphasenträger ist die Verwendung gängiger Pipettierroboter, Dispensierautomaten und Plate-Washer sowie eine Vakuumtrocknung möglich. Weiterhin ist die mehrfache Aufgabe und das Absaugen von Reagenzlösungen möglich. Durch die Punktschweißung werden die Membranstückchen von Wasch- und anderen Lösungen sehr gut umspütt und es findet keine Reservoirbildung zwischen Festphasenträger und Bodenbereich statt. Weiterhin ist die erfindungsgemäße Vorrichtung sehr variable bezüglich der gewünschten Synthesemenge durch Verwendung unterschiedlicher MTPs bzw. Membranen. Die Synthesemenge kann sehr genau durch die Fläche der Membran eingestellt werden. Durch ein Verglasen des Kontaktpunktes beim Anschweißen der Membran ist eine visuelle Kontrolle über die Qualität der Schweißung, vorteilhafterweise auf der Unterseite einer MTP, möglich. Weiterhin ist als Vorteil zu nennen, daß sich die Membran vor dem Ausstanzen batchweise funktionalisieren läßt.

Eine bevorzugte Verwendung der erfindungsgemäßen Synthesevorrichtung liegt auf dem Gebiet der kombinatorischen Chemie, da durch die Parallelisierung und Miniaturisierung eine Vielzahl verschiedener Verbindungen in sehr kurzer Zeit und mit vergleichsweise einfachen Mitteln möglich ist.

### BEISPIELE

### Beispiel 1 Verlust der Synthesemenge einer fixierten Membran im Vergleich zu einer nicht fixierten Membran

a) Der geometrische Verlust (Verglasungsfläche im Verhältnis zur Gesamtfläche gemäß Figur 2 bei Fixierung mit einer Metallnadel) konnte für eine 384er PP-MTP und eine mit Aminogruppen funktionalisierten PP Membran des Herstellers AIMS Scientific Products GbR, Braunschweig (800 nmol /cm²) mit weniger als 5% ermittelt werden.
b) Der Verlust an chemischer Ausbeute unter gleichen Bedingungen wie in a) konnte mittels Kupplung von Aminosäuren nach Standard-Peptidsynthese und anschließender Fmoc-Analytik bestimmt werden. Dazu wurden MembranScheiben mit einem Durchmesser von etwa 3 mm bzw. Membranquadrate mit einer Kantenlänge von etwa 1.05 mm in eine 384er MTP der Firma Greiner bzw. eine 1536er MTP gelegt und mit einer heißen Metallnadel fixiert bzw. angeschweißt. Auf die Membranbereiche wurde nach Standard-Synthese-Protokollen (Fields et al. 1990) Fmoc-Alanin gekuppelt und die Beladung der Membran durch Fmoc-Analytik bestimmt. Dazu wurde die Fmoc-Schutzgruppe mit 20 % Piperidin abgespalten und die Menge der Fmoc-Gruppe photometrisch bestimmt (Extinktionskoeffizient: 7800 M⁻¹cm⁻¹). Für die Membran-Bereiche in den 384er MTP wurde eine durchschnittliche Beladung von 52 nmol gefunden. Die berechnete Stoffmenge war 57 nmol. Für die Membranbereiche in den 1536er MTP wurden durchschnittlich 8.5 nmol gefunden bei einer berechneten Menge von 8.6 nmol.

### Beispiel 2 Entfernen von Reagenzresten

Bei Wasch-Zyklen werden mit Reagenz-Lösung (Fluorescein) getränkten Membran-Bereiche gewaschen. Eine Membran mit einem Durchmesser von 3.0 mm wurde in acht Wells einer 384 PP MTP der Firma Greiner Bio-one (Frickenhausen) befestigt und mit 3 µl einer 0.1 mg/ml Fluorescein-Lösung (= 220 nmol, 0.073 mol/l) belegt und in einem LUMI-Imager® der Fa. Roche Diagnostics GmbH, Mannheim, die Fluoreszenz bestimmt (50 ms, 560 nm). Anschließend wurde mittels eines Embla 384 Plate Washers der Firma Molecular Devices (Ismaningen) mit Ethanol (+ 0.1 % TFA) gewaschen und anschließend sofort wieder im LUMI-Imager die Fluoreszenz gemessen. Folgendes Waschprogramm wurde verwendet:
- Befüllen mit 20 µl Lösung;
- Warten 10 s
- Absaugen (2 mm/s Vorschub, 2 s Warten)

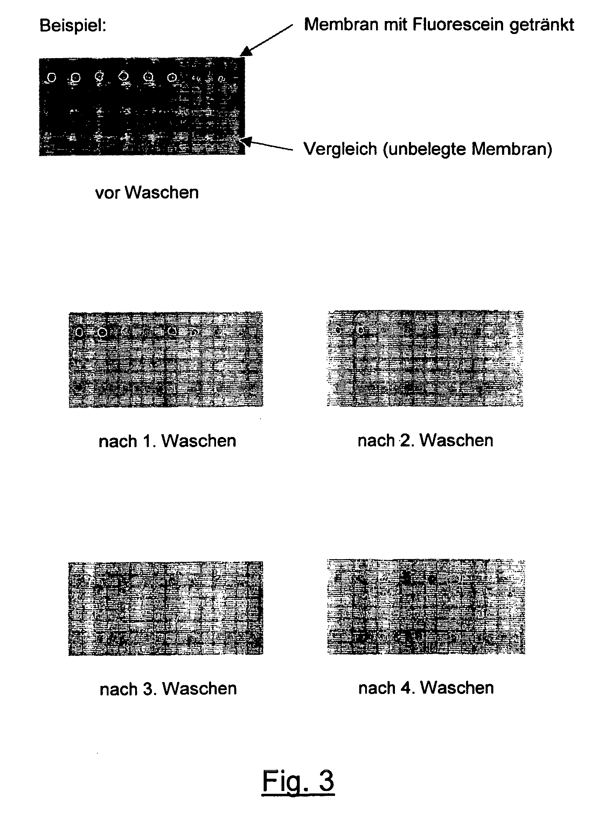

Nach maximal vier dieser Waschdurchgänge war kein Unterschied zu den nicht behandelten Membranen zu detektieren wie Figur 3 zeigt.

## Patentansprüche

1. Synthesevorrichtung mit einem mindestens eine Kavität aufweisenden Substrat sowie einem in der Kavität angeordneten Festphasenträger, der punktförmig an einem entsprechenden Teilbereich der Kavität befestigt ist.

2. Synthesevorrichtung nach Anspruch 1, wobei das Substrat eine Mikrotiterplatte ist und die Kavitäten den in der Mikrotiterplatte vorgesehenen Wells entsprechen.

3. Synthesevorrichtung nach Anspruch 1 oder 2, wobei die Kavität mindestens einen Wandabschnitt und einen Bodenbereich aufweist.

4. Synthesevorrichtung nach Anspruch 3, wobei der Festphasenträger am Bodenbereich und/oder am Wandabschnitt der Kavität befestigt ist.

5. Synthesevorrichtung nach einem der Ansprüche 1 bis 4, wobei der Festphasenträger durch Einwirkung thermischer Energie an mindestens einem Teilbereich der Kavität befestigt ist.

6. Synthesevorrichtung nach Anspruch 5, wobei der Festphasenträger mit mindestens einem Schweißpunkt pro Kavität am Substrat befestigt ist.

7. Synthesevorrichtung nach einem der Ansprüche 1 bis 6, wobei der Festphasenträger eine chemisch funktionalisierte Membran ist.

8. Synthesevorrichtung nach einem der Ansprüche 1 bis 7, wobei das Substrat thermoplastische Eigenschaften aufweist.

9. Synthesevorrichtung nach einem der Ansprüche 1 bis 7, wobei sowohl das Substrat als auch der Festphasenträger thermoplastische Eigenschaften aufweisen.

10. Synthesevorrichtung nach einem der Ansprüche 1 bis 9, wobei der Festphasenkörper aus der Gruppe ausgewählt ist, die aus einer Teflonmembran, Cellulose, Polypropylen besteht.

11. Synthesevorrichtung nach einem der Ansprüche 1 bis 10, wobei das Substrat aus Polypropylen ausgebildet ist.

12. Synthesevorrichtung nach einem der Ansprüche 1 bis 11, wobei die Form des Festphasenträger im wesentlichen der Form der Kavität in Bezug auf deren Grundfläche entspricht.

13. Synthesevorrichtung nach einem der Ansprüche 3 bis 12, wobei der Festphasenträger derart ausgebildet ist, daß er den Wandabschnitt der Kavität größtenteils nicht berührt.

14. Verfahren zur Herstellung einer Synthesevorrichtung, insbesondere nach einem der Ansprüche 1 bis 13 mit den Schritten:
a) Bereitstellen eines Substrats mit mindestens einer Kavität;
b) Versehen zumindest des Wandbereichs der Kavität mit Flüssigkeit;
c) Einbringen eines Festphasenträgers in die Kavität; und
d) Befestigen des Festphasenträgers in der Kavität durch Verbinden eines in Bezug auf seine Gesamtfläche kleinen Flächenabschnitts mit einem entsprechenden Teilbereich der Kavität.

15. Verfahren nach Anspruch 14, wobei das Befestigen gemäß Schritt d) durch Einwirkung von thermischer Energie erfolgt.

16. Verfahren nach Anspruch 15, wobei das Befestigen gemäß Schritt d) durch Punktschweißen erfolgt.

17. Verfahren nach einem der Ansprüche 14 bis 16, wobei der Festphasenträger pro Kavität an einer einzigen Stelle befestigt wird.

18. Verfahren nach einem der Ansprüche 14 bis 17, wobei das Einbringen gemäß Schritt c) durch Ausstanzen des Festphasenträgers aus einem Bogen erfolgt, wobei der ausgestanzte Festphasenträger in die Kavität fällt.

19. Verfahren nach einem der Ansprüche 14 bis 18, wobei die Form des Festphasenträger im wesentlichen der Form der Kavität in Bezug auf deren Grundfläche entspricht.

20. Verfahren nach einem der Ansprüche 14 bis 19, wobei der Festphasenträger derart ausgebildet wird, daß er ohne Wandberührung in die Kavität einbringbar ist.

21. Verfahren nach einem der Ansprüche 15 bis 20, wobei das Befestigen gemäß Schritt d) durch Drücken des Festphasenträgers mit mindestens einer auf etwa 450 °C erwärmten Metallspitze mit einem Durchmesser von etwa 0.3 mm für etwa 0.8 s auf die Kavität erfolgt.

22. Verfahren nach einem der Ansprüche 14 bis 21, wobei beim Befestigen gemäß Schritt d) ein Verglasen des Verbindungsbereichs erfolgt.

23. Verwendung der Synthesevorrichtung nach einem der Ansprüche 1 bis 13 bzw. des Verfahrens nach einem der Ansprüche 14 bis 22 in der kombinatorischen Chemie, insbesondere der Festphasensynthese.

## Claims

1. A synthesis apparatus with a substrate having at least one cavity as well as a solid phase support arranged in the cavity, the solid phase support being punctually fixed to a corresponding partial section of the cavity.

2. The synthesis apparatus according to claim 1, wherein the substrate is a microtiterplate and the cavities correspond to the wells provided in the microtiterplate.

3. The synthesis apparatus according to claim 1 or 2, wherein the cavity comprises at least one wall section and one bottom section.

4. The synthesis apparatus according to claim 3, wherein the solid phase support is fixed to the bottom section and/or the wall section of the cavity.

5. The synthesis apparatus according to any one of claims 1 to 4, wherein the solid phase support is fixed by the effects of thermal energy to at least one partial section of the cavity.

6. The synthesis apparatus according to claim 5, wherein the solid phase support is fixed with at least one welding point per cavity to the substrate.

7. The synthesis apparatus according to any one of claims 1 to 6, wherein the solid phase support is a chemically functionalized membrane.

8. The synthesis apparatus according to any one of claims 1 to 7, wherein the substrate has thermoplastic properties.

9. The synthesis apparatus according to any one of claims 1 to 7, wherein both the substrate and the solid phase support have thermoplastic properties.

10. The synthesis apparatus according to any one of claims 1 to 9, wherein the solid phase body is chosen from the group comprising a teflon membrane, cellulose, polypropylene.

11. The synthesis apparatus according to any one of claims 1 to 10, wherein the substrate is made of polypropylene.

12. The synthesis apparatus according to any one of claims 1 to 11, wherein the shape of the solid phase support is essentially the shape of the cavity with regard to its bottom area.

13. The synthesis apparatus according to any one of claims 3 to 12, wherein the solid phase support is formed in such a manner that it hardly has contact to the wall section of the cavity.

14. A method of manufacturing a synthesis apparatus, especially according to any one of claims 1 to 13 comprising the steps of:
a) providing a substrate with at least one cavity;
b) spraying at least the wall area of the cavity with fluid;
c) introducing a solid phase support into the cavity; and
d) fixing the solid phase support in the cavity by bonding a relatively small area section as compared to its total area to a corresponding partial section of the cavity.

15. The method according to claim 14, wherein the fixing according to step d) is effected by the influence of thermal energy.

16. The method according to claim 15, wherein the fixing according to step d) is effected by point welding.

17. The method according to any one of claims 14 to 16, wherein the solid phase support is fixed per cavity at one single point.

18. The method according to any one of claims 14 to 17, wherein the introduction according to step c) is effected by stamping the solid phase support out of a sheet, wherein the stamped out solid phase support falls into the cavity.

19. The method according to any one of claims 14 to 18, wherein the shape of the solid phase support corresponds essentially to the shape of the cavity with regard to its bottom area.

20. The method according to any one of claims 14 to 19, wherein the solid phase support is formed in such a manner that it is introducible into the cavity without contact to the wall.

21. The method according to any one of claims 15 to 20, wherein fixing according to step d) is effected by pressing the solid phase support with at least one metal point heated to about 450°C and having a diameter of about 0.3mm for about 0.8s on the cavity.

22. The method according to any one of claims 14 to 21, wherein during fixing according to step d) vitrification of the bonding area occurs.

23. Use of the synthesis apparatus according to any one of claims 1 to 13 or the method according to any one of claims 14 to 22 in the combinatorial chemistry especially in the solid phase synthesis.

## Revendications

1. Dispositif de synthèse comportant un substrat présentant au moins une cavité ainsi qu'un support de phase solide disposé dans la cavité, et fixé de manière ponctuelle à une zone partielle correspondante de la cavité.

2. Dispositif de synthèse selon la revendication 1, dans lequel le substrat est une plaque de microtitration et les cavités correspondent aux puits prévus dans la plaque de microtitration.

3. Dispositif de synthèse selon la revendication 1 ou 2, dans lequel la cavité présente au moins une section de paroi et une zone de fond.

4. Dispositif de synthèse selon la revendication 3, dans lequel le support de phase solide est fixé à la zone de fond et/ou à la section de paroi de la cavité.

5. Dispositif de synthèse selon l'une quelconque des revendications 1 à 4, dans lequel le support de phase solide est fixé à au moins une zone partielle de la cavité par l'action d'énergie thermique.

6. Dispositif de synthèse selon la revendication 5, dans lequel le support de phase solide est fixé au substrat par au moins un point de soudure par cavité.

7. Dispositif de synthèse selon l'une quelconque des revendications 1 à 6, dans lequel le support de phase solide est une membrane chimiquement fonctionnalisée.

8. Dispositif de synthèse selon l'une quelconque des revendications 1 à 7, dans lequel le substrat présente des propriétés thermoplastiques.

9. Dispositif de synthèse selon l'une quelconque des revendications 1 à 7, dans lequel tant le substrat que le support de phase solide présentent des propriétés thermoplastiques.

10. Dispositif de synthèse selon l'une quelconque des revendications 1 à 9, dans lequel le support de phase solide est choisi dans le groupe formé par une membrane de téflon, de la cellulose, du polypropylène.

11. Dispositif de synthèse selon l'une quelconque des revendications 1 à 10, dans lequel le substrat est constitué de polypropylène.

12. Dispositif de synthèse selon l'une quelconque des revendications 1 à 11, dans lequel la forme du support de phase solide correspond sensiblement à la forme de la cavité en ce qui concerne leur surface de base.

13. Dispositif de synthèse selon l'une quelconque des revendications 3 à 12, dans lequel le support de phase solide est configuré de manière à ne pas toucher en majeure partie la section de paroi de la cavité.

14. Procédé de fabrication d'un dispositif de synthèse, en particulier selon l'une quelconque des revendications 1 à 13, comprenant les étapes suivantes :
a) Procurer un substrat comportant au moins une cavité,
b) Munir au moins la section de paroi de la cavité de liquide,
c) Introduire un support de phase solide dans la cavité, et
d) Fixer le support de phase solide dans la cavité par solidarisation d'une section de surface petite par rapport à sa surface totale avec une zone partielle correspondante de la cavité.

15. Procédé selon la revendication 14, dans lequel la fixation selon l'étape d) se fait par l'action d'énergie thermique.

16. Procédé selon la revendication 15, dans lequel la fixation selon l'étape d) est réalisée par soudage par points.

17. Procédé selon l'une quelconque des revendications 14 à 16, dans lequel le support de phase solide est fixé en un seul endroit par cavité.

18. Procédé selon l'une quelconque des revendications 14 à 17, dans lequel l'introduction selon l'étape c) se fait par matriçage du support de phase solide d'une feuille, le support de phase solide tombant dans la cavité.

19. Procédé selon l'une quelconque des revendications 14 à 18, dans lequel la forme du support de phase solide correspond sensiblement à la forme de la cavité en ce qui concerne leur surface de base.

20. Procédé selon l'une quelconque des revendications 14 à 19, dans lequel le support de phase solide est configuré de manière qu'il puisse être introduit dans la cavité sans toucher la paroi.

21. Procédé selon l'une quelconque des revendications 15 à 20, dans lequel la fixation selon l'étape d) se fait par pression du support de phase solide sur la cavité avec au moins une pointe métallique chauffée à environ 450°C et d'un diamètre d'environ 0,3 mm pendant environ 0,8 s.

22. Procédé selon l'une quelconque des revendications 14 à 21, dans lequel, lors de la fixation selon l'étape d), il se produit une vitrification de la zone de liaison.

23. Utilisation du dispositif de synthèse selon l'une quelconque des revendications 1 à 13 ou du procédé selon l'une quelconque des revendications 14 à 22 en chimie combinatoire, en particulier dans la synthèse en phase solide.
